# EUROPEAN PATENT SPECIFICATION

(11) **EP 1 719 786 B1**
(45) Date of publication and mention of the grant of the patent: **06.05.2020**
(21) Application number: 05710180.0
(22) Date of filing: 14.02.2005
(51) Int. Cl.: C08F 255/02, C08F 220/06, C08F 222/02, C08F 222/04, C08F 220/10, C09D 5/00, C09D 11/106, C08L 51/06, C09D 151/06, C09J 151/06, C08F 255/04, C08F 222/06, C08F 220/14, C08F 220/18

(54) **MODIFIED POLYOLEFIN RESIN**
MODIFIZIERTES POLYOLEFINHARZ
RÉSINE DE POLYOLÉFINE MODIFIÉE

(30) Priority: 26.02.2004 JP 2004052468; 27.05.2004 JP 2004157711
(43) Date of publication of application: 08.11.2006
(73) Proprietor: Nippon Paper Industries Co., Ltd., Tokyo 114-0002 (JP)
(72) Inventor: SEKIGUCHI, Shunji, Iwakuni-shi, Yamaguchi 740003 (JP); TODA, Sanae, Iwakuni-shi, Yamaguchi 740003 (JP); USUI, Kazuhiro, Iwakuni-shi, Yamaguchi 740003 (JP); FUJITAKA, Terumasa, Iwakuni-shi, Yamaguchi 740003 (JP); NAGAOKA, Hideaki, Iwakuni-shi, Yamaguchi 740003 (JP); FUJINO, Kenichi, Iwakuni-shi, Yamaguchi 740003 (JP); HIROSE, Takayuki, Iwakuni-shi, Yamaguchi 740003 (JP); OKAYAMA, Kensho, Iwakuni-shi, Yamaguchi 740003 (JP)
(74) Representative: Lamb, Martin John Carstairs
(86) International application number: PCT/JP2005/002178
(87) International publication number: WO 2005/082963

(56) References cited:
- EP-A- 1 321 481
- EP-A- 1 469 035
- EP-A- 1 482 010
- EP-A- 1 500 680
- WO-A-02/36651
- JP-A- 2 173 008
- JP-A- 2 173 009
- JP-A- 6 145 286
- JP-A- 9 059 325
- JP-A- 9 132 617
- JP-A- 9 132 619
- JP-A- 59 217 709
- JP-A- 2003 321 588
- JP-A- 2003 327 761
- JP-A- 2004 307 838

## Description

### TECHNICAL FIELD

The present invention relates to modified polyolefin resins and compositions thereof dissolved or dispersed in solvents. More specifically, the present invention relates to modified polyolefin resins that are favorable as adhesives, binders and primers.

### BACKGROUND ART

Polyolefin resins such as polypropylene and polyethylene are widely used in late years for, e.g., sheets, films, and formed articles because they have many excellent properties such as formability, chemical resistance, water resistance, and electric characteristics while they are low in price. However, substrates formed of these polyolefin resins (hereinafter, referred to as "polyolefin-based substrates") are non-polar and crystalline, so that difficulty in coating and adhesion arises in contrast to polar substrates formed of materials such as polyurethane resins, polyamide resins, acrylic resins, and polyester resins.

For this reason, a pre-treatment agent which is adhesive to both a substrate and a coating is preliminarily applied on a surface of the substrate. Such a pre-treatment agent is called in various names such as a binder or a primer depending on the purpose, and also called as an adhesive. As such a pre-treatment agent, for example, resins having predetermined properties are used. Hot-melt type pre-treatment agents that melt under heating to turn into a binder and solvent-based pre-treatment agents obtainable by dissolving a resin in a solvent are available.

In another known method, adhesion property is improved by increasing affinity with a polyolefin-based substrate using a chlorinated polyolefin resin as a coating composition. However, this method still has a stability problem caused by dehydrochloration, and fails to deal with the problem that use of chlorine tends to be refrained due to increased environmental consciousness.

For addressing these problems, acid-modified polyolefin resins typically unsaturated carboxylic acid modified resins have been proposed as compositions not using chlorine. In the conventional acid-modified polyolefin resins, those using a crystalline polyolefin resin as a raw material have excellent adhesive strength when adhered at high temperatures and will not cause a problem of tack, however, they do not present adhesive strength when adhered at low temperatures, and generally have poor solubility.

In order to solve the above problems, a non-crystalline polyolefin resin is conventionally used as a material. As such a resin, propylene-based random copolymers are often used.

In propylene-based random copolymers, crystallinity of polypropylene is destroyed by addition of other monomers during production of polypropylene. However, an acid-modified substance of propylene-based random copolymer is poor in adhesive strength and leads to tack in a resultant dry coating film. This leads to a problem that when such an acid-modified substance is applied on a film substrate, blocking occurs when the film substrate is wound after the application. Also such an acid-modified substance is difficult to dissolve in non-aromatic solvents, and although it is soluble in aromatic solvents, the resultant solution is unstable.

As a solution to these problems, there is a report (for example, Patent document 1) that describes improvement in solvent solubility, long-term storage stability of a solution, and the like by reacting an unsaturated carboxylic acid such as maleic anhydride that is graft modified into a polyolefin resin, with polyester, alcohol, or the like. There is also a report that describes improvement in adhesion strength, solvent solubility, tackiness, and the like by modifying a non-crystalline polyolefin resin with an unsaturated carboxylic acid and an acrylic derivative (for example, Patent document 2).

However, in a production process using a Ziegler-Natta catalyst, which is widely used in production of propylene-based random copolymers, fine control of the molecular weight and monomer composition is difficult with the result that there arises a structure of low molecular weight in which content of ethylene component is relatively high, and a structure of high molecular weight in which content of propylene component is relatively high in no small part. The former causes appearance of tackiness and reduction in adhesive strength, and the latter causes deterioration in solvent solubility and reduction in adhesive strength at low temperatures. Therefore, in the conventional acid-modified propylene-based random copolymers, the obtainable physical properties are limited.

In recent years, people tend to refrain from using organic solvent-base paints and adhesives from the view point of environmental issues, and also pre-treatment agents change over to water-based ones. Water-based resin compositions that adhere to a polyolefin substrate are disclosed, for example, in Patent document 3 and Patent document 4. However, since the conventional raw material resin to be subjected to aqueous conversion is produced by using a Ziegler-Natta catalyst, fine controlling of the molecular weight and monomer composition is generally difficult, so that the resultant propylene-based random copolymer has a wide molecular weight distribution (Mw/Mn) and contains structures having low molecular weights and relatively high content of ethylene components. This deteriorates performances such as adhesive strength to a polyolefin substrate, water resistance, gasohol resistance, and blocking resistance.

In order to eliminate these problems, there is known a method that adds a cross-linking agent (for example, Patent documents 5 and 6). In this method, however, since other resins such as polyurethane or vinyl water-based resins are mixed, a problem of adhesion property to a polyolefin substrate arises.

Additionally, in recent years, it is strongly requested for water-based resin compositions to bear a low temperature baking process and have high solidity, in order to reduce the energy and time required in drying and baking processes after application on a substrate. The condition for low temperature baking process tends to be stricter, and sometimes, a condition of 60°C is requested.

As a measure to respond to the low temperature baking, lowering the softening temperature of the polypropylene-based random copolymer which is a raw material is effective. In recent years, propylene-based random copolymers having a very narrow molecular weight distribution (Mw/Mn is not more than about 2) and a low melting point (Tm) can be produced using a metallocene catalyst. Under such a situation, a propylene-based random copolymer generated by means of the metallocene catalyst is chlorinated and is subjected to acid modification to develop a water-based resin composition which is suited to low temperature baking (80 to 90°C) (see for example, Patent document 7). Since the chlorine-based resin described in Patent document 7 has a low melting point compared to non-chlorine-based resins, a water-based resin composition thereof is suited to low temperature baking. However, with the recent increased environmental consciousness, non-chlorine-based, water-based resin compositions that are suited for low temperature baking are demanded.

Also disclosed is a water-based dispersion having excellent heat seal performance prepared by acid modification to ethylene/α-olefin random copolymer generated by means of the metallocene catalyst (for example, Patent document 8). However, since this water-based dispersion is based on ethylene, sufficient adhesion to other polyolefin substrates such as polypropylene is not achieved.

In addition, water-based resin compositions containing acid-modified polyolefin are generally poor in compatibility with other resins, and resins that can be mixed therewith in production of a paint for application and ink for printing are limited. Therefore, it was difficult to produce paints, inks or adhesives having sufficient performance.

Patent document 1: Japanese Patent Laid-Open Publication No. H11-217537
Patent document 2: Japanese Patent Laid-Open Publication No. 2002-173514
Patent document 3: Japanese Patent Laid-Open Publication No. H6-256592
Patent document 4: Japanese Patent Laid-Open Publication No. 2001-504542
Patent document 5: Japanese Patent Laid-Open Publication No. 2002-80686
Patent document 6: Japanese Patent Laid-Open Publication No. H6-145286
Patent document 7: Japanese Patent Laid-Open Publication No. 2003-327761
Patent document 8: Japanese Patent Laid-Open Publication No. 2001-106838

### DISCLOSURE OF INVENTION

### PROBLEM TO BE SOLVED BY THE INVENTION

It is an object of the present invention to provide a novel resin which is excellent in adhesion strength to a non-polar substrate made of resin such as polyolefin resin, in particular, to a hardly adherent substrate.

It is also an object of the present invention to provide a resin and a composition comprising the same having various properties that are required in an under coat applied before application of a paint, such as excellent water resistance, gasohol resistance, blocking resistance and storage stability; facility to high solidification; low tackiness; suitability to low temperature baking; and compatibility with other resins. Furthermore, it is an object of the present invention to provide resins having excellent solubility in solvents when organic solvents are used as solvents. It is also an object of the present invention to provide an eco-friendly resin composition, which is suitable as an under coat.

### MEANS FOR SOLVING PROBLEM

In order to achieve the above objects, inventors of the present application made diligent efforts and found that the above objects can be achieved by using a resin that is obtainable by graft modification of a raw material, propylene-based random copolymer resin having a melting temperature (Tm), measured with a differential scanning calorimetry (DSC) of 50 to 130°C selected from propylene-based random copolymers polymerized by using a metallocene catalyst as a polymerization catalyst, the graft modification using an unsaturated carboxylic acid and/or its derivative together with a (meth)acrylic acid ester, thereby completing the present invention.

More specifically, the present invention provides the following modified polyolefin resin and applications thereof.
(1) A modified polyolefin resin, which is obtainable by graft modifying a propylene-based random copolymer having a melting point of 50 to 130°C as determined by differential scanning calorimetry (DSC), the copolymer being obtainable by polymerization in the presence of a metallocene catalyst, with an unsaturated carboxylic acid and/or its derivative and with a (meth)acrylic acid ester, and
   which has a weight average molecular weight of 15,000 to 200,000 as determined by gel permeation chromatography (GPC), a graft weight of the unsaturated carboxylic acid and/or its derivative being in the range of 0.1 to 20% by weight, a graft weight of the (meth)acrylic acid ester being in the range of 0.1 to 30% by weight.
(2) An adhesive, comprising the modified polyolefin resin according to item (1).
(3) A primer, comprising the modified polyolefin resin according to item (1).
(4) A binder for paint, comprising the modified polyolefin resin according to item (1).
(5) A binder for ink, comprising the modified polyolefin resin according to item (1).
(6) A polyolefin formed article, comprising:
   a polyolefin substrate, an undercoat layer formed of the modified polyolefin resin according to item (1), and a paint layer;
   wherein the undercoat layer is overlaid on the polyolefin substrate; and
   wherein the paint layer is overlaid on the undercoat layer.
(7) A modified polyolefin resin composition, comprising:
   the modified polyolefin resin according to item (1); and an organic solvent.
(8) A modified polyolefin resin composition, comprising:
   the modified polyolefin resin according to item (1) ; water; and a surfactant,
   the modified polyolefin resin being dispersed in water to have an average particle diameter of not more than 300 nm obtained from the particle size distribution as determined by light scattering.

Low melting point propylene-based random copolymers produced by using a metallocene catalyst as a polymerization catalyst are characterized by significantly narrower molecular weight distribution (Mw/Mn of not more than approximately 2) compared to those produced by using a conventional Ziegler-Natta catalyst. The propylene-based random copolymers obtained by modification thereof with an unsaturated carboxylic acid or its derivative are also found to have a very narrow molecular weight distribution. Use of a (meth) acrylic acid ester (B) together with the unsaturated carboxylic acid and/or its derivative (A) at the time of modification could improve compatibility with other resins and prevent the molecular weight from lowering by degrading polyolefin backbones.

As described above, since the molecular weight distribution is narrowed and those having low molecular weights are reduced using a metallocene catalyst, and the melting point is lowered while keeping its crystallinity, the modified polyolefin resin of the present invention is excellent in adhesive strength as well as in properties such as water resistance, gasohol resistance, and blocking resistance. The modified polyolefin resin of the present invention is also favorable in terms of low temperature baking and high solidification. Also, the modified polyolefin resin of the present invention has good compatibility with other resins.

The modified polyolefin resin of the present invention also has good solubility in an organic solvent.

A water-based resin composition containing the modified polyolefin resin of the present invention realizes excellent performance such as adhesion with olefin-based materials, blocking resistance, water resistance, and gasohol resistance regardless of its aqueous property. Furthermore, dispersion defect due to increase in melt viscosity during aqueous conversion will not occur, and the viscosity of the resultant final product will not rise, so that it realizes good workability and suitability to high solidification, while having excellent adhesive strength to a substrate under a low temperature baking condition of 60 to 90°C.

The modified polyolefin resin of the present invention exhibits excellent storage stability even after it is dissolved in a solvent.

### BEST MODE FOR CARRYING OUT THE INVENTION

### 1. Modified polyolefin resin of the present invention

The modified polyolefin resin of the present invention is obtainable by graft modifying a propylene-based random copolymer having a melting point of 50 to 130°C obtainable by polymerization in the presence of a metallocene catalyst, with an unsaturated carboxylic acid and/or its derivative and with a (meth)acrylic acid ester.

The propylene-based random copolymer used as a raw material in the present invention is a copolymer obtained by copolymerization of propylene which is a main component and an α-olefin which is a comonomer using a metallocene catalyst as a polymerization catalyst. As to the units composing a molecule, the molar ratio of propylene units to the total molar amount of the polypropylene units plus the other olefin units is ferably not less than 90% and less than 100%.

As other α-olefins, at least one may be selected from the groups consisting of ethylene or olefins having 4 or more carbons. Examples of the olefins having 4 or more carbons include 1-butene, 1-hexene, 4-methyl-1-pentene, and 1-octene. Using these, it is possible to lower the melting point of the propylene-based random copolymer.

The propylene-based random copolymer used in the present invention has a melting point (Tm) of 50 to 130°C, and preferably 70 to 90°C, measured with differential scanning calorimetry (DSC). This melting point is relatively low for copolymers. If the melting point is higher than 130°C, the melt viscosity of the modified resin increases and the workability in aqueous conversion process is impaired. Contrarily, if the melting point is lower than 50°C, the crystallinity is lost, so that adhesive strength to materials, blocking resistance, water resistance, and gasohol resistance are impaired.

In a particular use, for example, as a primer for an automobile bumper, solvent resistance (gasoline resistance and gasohol resistance) of a coating film is strongly required. If the melting point of the resin is too low, solubility in a solvent is too high to cause reduction in solvent resistance of the coating film. On the contrary, if the melting point of the resin is too high, adhesive strength to a material especially at the time of low temperature baking is poor, and solvent resistance of the coating film is impaired. Therefore, it is important to use a raw material resin having an optimum melting point. As to the propylene-based random copolymer which is a raw material in the present invention, those having a melting point of 70 to 90°C exhibit very excellent solvent resistance as a primer that bears to low temperature baking.

Measuring of Tm with a DSC in the present invention was conducted using a DSC measuring machine available from Seiko Instruments Inc. in the following manner. After melting approximately 10 mg of sample at 200°C for 5 minutes, the temperature was lowered to -60°C at a rate of 10°C/min to cause crystallization, then the temperature was raised to 200°C at a rate of 10°C/min to cause melting, and a temperature at the melting peak was evaluated.

The physical properties requested for the resin of the present invention are high crystallinity and low melting point. Since high crystallinity is usually associated with high melting point, in order to realize high crystallinity and low melting point which are contradictory physical properties at the same time, a copolymer produced by using a metallocene catalyst is used in the present invention.

When a copolymer is produced using a Ziegler-Natta catalyst that is commonly used likewise the metallocene catalyst, the following problems arise. Since the Ziegler-Natta catalyst is a multi-site catalyst and is nonuniform in respect of catalyst active sites, it gives adverse affects on the problems to be solved by the present invention in respect of (i) crystallinity, (ii) composition distribution, and (iii) molecular weight distribution. The point of (i) implies difficulty in control of perfect isotacticity, control of syndiotacticity or desirable control of stereoregularity. As a result, a distortion occurs in crystallinity, and a polymer chain has a low crystalline part and a high crystalline part. In the low crystalline part, cohesive strength is low and deterioration of adhesion strength is caused. The melting point is still high because of the existence of the high crystalline part. In order to lower the melting point, it is necessary to destroy the crystallinity, however, in the case where a Ziegler-Natta catalyst is used, fine control of tacticity is difficult, so that it is difficult to effectively lower the melting point. Therefore, in order to lower the melting point, it is necessary to add other components such as ethylene, however, in such a case, the point of (ii) will largely influence on the physical property of the copolymer. When a Ziegler-Natta catalyst is used, other components such as ethylene exist nonuniformly in the copolymer. In other words, there are a part (A) which contains small amounts and a part (B) which contains large amounts of other components such as ethylene. The part (A) inhibits the melting point of the copolymer from lowering, and the part (B) causes appearance of tack and problem in adhesion property to hinder achievement of the objects of the present invention. The point of (iii) implies that a polymer having a very wide molecular weight distribution ranging from low molecular weight polymers to high molecular weight polymers is synthesized. As a result, the low molecular weight polymers cause deterioration in adhesive strength and occurrence of tacks.

Contrarily to this, the metallocene catalyst is a single-site catalyst, and has a uniform catalytic active site. Therefore, it positively influence on the problems to be solved by the present invention in respect to (i) crystallinity, (ii) composition distribution, and (iii) molecular weight distribution. The point of (i) implies ability to desirably control the perfect isotacticity and syndiotacticity. Therefore, a distortion may not occur in crystallinity, and polymers which are uniform in respect of molecule composition, for example, arrangement of propylene unit and other constituting units; content ratio of constituting units are obtained. Therefore, a low crystalline part that will reduce the adhesive strength is less likely to occur. The point of (i) also implies the facility in desired control of steric regularity. Even when the crystallinity is destroyed to lower the melting point, it can be destroyed in good balance without adding other components because of the regularity of crystallinity. Therefore, it is possible to lower the melting point while keeping the crystallinity to some degree. The point of (ii) implies that when other components are used together, they can be introduced regularly, and the melting point can be effectively lowered with a small adding amount. The point of (iii) implies that polymers having a very narrow molecular weight distribution are synthesized. As a result, low molecular weight polymers may not generate, and hence reduction in adhesion strength and appearance of tack will not be caused. Therefore, as the catalyst used for solving the problems of the present invention, a metallocene catalyst is used.

As one manner for expressing the degree of molecular weight distribution, a ratio Mw/Mn of weight average molecular weight (Mw) to number average molecular weight (Mn) of polymer may be used. In the case of monodispersion, this ratio is 1, and the larger the dispersion, the larger the value of this ratio.

In the present description, the term "molecular weight distribution" refers to a value Mw/Mn obtained by dividing weight average molecular weight of (Mw) of polymer by number average molecular weight (Mn). The molecular weight distribution of the modified polyolefin resin of the present invention is preferably not more than 3, for example. The weight average molecular weight may be determined by known methods, for example, GPC (Gel Permeation Chromatography) and light scattering method. Values of weight average molecular weight and number average molecular weight in the present description are determined by GPC method.

The metallocene catalyst used herein may be those known in the art. Concretely, catalysts obtained by combination of Components (a) and (b), and Component (c) as necessary are preferably used.
Component (a): metallocene complexes which are transition metal compounds of Groups 3 to 6 in the periodic table having at least one ligand with a conjugated five-membered ring.
Component (b): promoters capable of activating the metallocene complex (a) by reacting the compound (b) and the metallocene complex (a) with each other.
Component (c): organoaluminum compounds.

The molecular weight of the propylene-based random copolymer used as a raw material in the present invention is not particularly limited. However, since the modified propylene-based random copolymer should have a weight average molecular weight of from 15,000 to 200,000, if the propylene-based random copolymer has a weight average molecular weight exceeding 200,000, it is necessary to control the molecular weight to an appropriate range by a known method such as degradation in the presence of heat or radical. These may be used singly or in combination.

As the propylene-based random copolymer used in the present invention, commercial items such as WINTECH (supplied from Japan Polypropylene Corporation) may be concretely used.

The unsaturated carboxylic acid used in graft modification in the present invention is an unsaturated hydrocarbon having a carboxylic group. A derivative thereof includes anhydrides. Examples of the unsaturated carboxylic acid and its derivative used in the present invention include preferably, fumaric acid, maleic acid, itaconic acid, citraconic acid, aconitic acid and anhydrides thereof, methyl fumarate, ethyl fumarate, propyl fumarate, butyl fumarate, dimethyl fumarate, diethyl fumarate, dipropyl fumarate, dibutyl fumarate, methyl maleate, ethyl maleate, propyl maleate, butyl maleate, dimethyl maleate, diethyl maleate, dipropyl maleate, and dibutyl maleate, and more preferably itaconic anhydride and maleic anhydride.

By modifying a propylene-based random copolymer produced by using a metallocene catalyst with an unsaturated carboxylic acid and/or its derivative, it is possible to realize excellent adhesive strength against an olefin-based substrate. Additional use of a (meth)acrylic acid ester in the modification further improves the physical properties such as adhesive strength, solubility in non-toluene solvents, and compatibility with other resins. In fact, when the modified polyolefin resin is used as an adhesive or a primer, compatibility is one of the important properties because it is often used in mixture with other resins.

In the present description, "(meth)acrylic acid ester" refers to a compound having at least one (meth)acryloyl group in the molecule. Examples of the (meth)acrylic acid ester include methyl(meth)acrylate, ethyl(meth)acrylate, n-butyl (meth)acrylate, cyclohexyl(meth)acrylate, hydroxyethyl (meth)acrylate, isobornyl(meth)acrylate, glycydyl (meth)acrylate, octyl(meth)acrylate, lauryl(meth)acrylate, tridecyl(meth)acrylate and stearyl(meth)acrylate. These may be used alone or in a mixed manner, and they may be mixed in any ratio. Particularly preferred are those containing not less than 20% by weight of at least one compound selected from (meth)acrylic acid esters represented by the general formula (I) below. By satisfying this condition, it is possible to make the molecular weight distribution extremely narrow, and hence to further improve the solubility in solvent and compatibility with other resins of the modified polypropylene-based resin. By modifying the propylene-based random copolymers having a melting point of 70 to 90°C described above under the aforementioned condition, it is possible to provide a primer bearable to low temperature baking having excellent solvent resistance.

CH₂=CR₁COOR₂ ... (I)

(wherein R₁ = H or CH₃, R₂ = CₙH₂ₙ₊₁, n = an integer of from 8 to 18)

With the graft modification being conducted using both an unsaturated carboxylic acid and/or its derivative and a (meth) acrylic acid ester, the graft weight of the unsaturated carboxylic acid and/or its derivative is in the range of 0.1 to 20% by weight, preferably in the range of 0.5 to 15% by weight, and particularly preferably in the range of 1 to 10% by weight, and the graft weight of the (meth) acrylic acid ester is in the range of 0.1 to 30% by weight, more preferably in the range of 0.5 to 20% by weight. If the graft weight is smaller than these ranges, compatibility with other resins and adhesive strength of the modified polypropylene-based random copolymer are reduced. Too large graft weight is undesirable because ultrahigh molecular weight polymers are formed due to too high reactivity and melt viscosity increases, and generation amounts of homopolymers and copolymers not grafting to the polypropylene backbone increase. A graft weight % of unsaturated carboxylic acid derivative and/or its anhydride (A) is determined by an alkaline titration method, however, it is determined by FT-IR or NMR when the derivative is an ester not having an acid group. In the present invention, a graft weight % is determined by an alkaline titration method for the cases where alkaline titration method is applicable, or determined by FT-IR or NMR if not the cases. A graft weight of (meth)acrylic acid ester may be determined by NMR.

A modified propylene-based random copolymer may be obtained by a known method.

The modified propylene-based random copolymer has a weight average molecular weight of from 15,000 to 200,000. If it is less than 15,000, adhesive strength to a non-polar substrate and cohesive strength are poor, while if it is more than 200,000, the melt viscosity during production of water-based resin composition increases to decrease the workability. A method of determining a weight average molecular weight is as described above.

The modified polyolefin resin of the present invention is able to function as an intermediate medium with respect to a substrate which is poor in adhesion properties, and on which a paint is difficult to be applied or adhered. For example, by overlaying the modified polyolefin resin of the present invention on a surface of a substrate formed of polyolefin-based resin according to a hot-melt method, and applying a paint, it is possible to improve the adhesion stability of the paint. Also it is effective in adhesion between polyolefin-based resins of poor adhesive property. In brief, the modified polyolefin resin of the present invention is desirably used as an adhesive, primer, binder for paint and binder for ink.

Examples of the material (substrate) to which the modified polyolefin resin of the present invention is desirably applied may include sheets and films made of non-polar substrate such as polypropylene, polyethylene, ethylene-propylene copolymer, and ethylene-vinyl acetate copolymer. The water-based resin of the present invention is featured in that it can be used even when these substrates are hardly adhesive because the surfaces thereof are not treated with plasma or corona. However, the water-based resin of the present invention may be used in the similar manner even for a substrate having been subjected to a surface treatment.

### 2. Organic solvent-base resin composition of the present invention

As another aspect of the present invention, a modified polyolefin resin composition in which a modified polyolefin resin is dissolved or dispersed in a solvent is also provided. First, a form in which an organic solvent is used as a solvent will be explained.

As the organic solvent, for example, aromatic solvents such as toluene and xylene; aliphatic solvents such as cyclohexane, methylcyclohexane, ethylcyclohexane, nonane, and decane; ester solvents such as ethyl acetate and butyl acetate; ketone solvents such as acetone, methylethylketone, and methylbutylketone; alcohol solvents such as methanol, ethanol, propanol, and butanol; or mixtures of these solvents may be used. From the view point of environmental issues, it is preferred to use a mixture of cyclohexane aliphatic solvent with an ester solvent or a ketone solvent.

An organic solvent-based modified polyolefin resin composition has particularly excellent adhesive strength and can be used as an adhesive for a non-polar substrate, primer, binder resin for paint or binder resin for ink. Depending on the necessity of use, it may be changed into other forms such as solution, powder, and sheet. In such a case, additives such as antioxidants, light stabilizers, UV-absorbers, pigments, dyes and inorganic fillers may be blended as is necessary.

In the use as an adhesive or binder resin for ink, not only non-polar substrates of polyethylene and polypropylene, but also polar substrates of polyester, polyurethane and polyamide are often used. Since the resin of the present invention also adheres to polar substrates, it may be suitably used in this use.

Similarly, for the use as a primer or a binder resin for paint, the resin of the present invention is suitably used because it has excellent adhesion property to a top coating or a clear coating. The modified polyolefin resin of the present invention has excellent compatibility with other resins. When it is used as a binder for paint or ink, other resins such as polyurethane resins, epoxy resins, acrylic resins, phenol resins, alkyd resins, polyamide resins, polyimide resins, silicone resins and cellulose nitrates may be blended as necessary.

### 3. Water-based resin composition of the present invention

As a further aspect, a modified polyolefin resin composition comprising the above modified polyolefin resin of the present invention, water, and a surfactant is provided.

In the present invention, a surfactant is used for dispersing and emulsifying the resin of the present invention in water. As the surfactant of the present invention, both nonionic surfactants and anionic surfactants may be used. Nonionic surfactants are preferred because they give better effect on the water resistance of the emulsified water-based resin composition.

Examples of the nonionic surfactant include polyoxyethylenealkyl ethers, polyoxyethylene alkylenealkyl ethers, polyoxyethylene derivatives, polyoxyethylene fatty acid esters, polyoxyethylene polyol fatty acid esters, polyoxyethylenepropylene polyols, sorbitan fatty acid esters, polyoxyethylene hardened castor oil, polyoxyalkylene polycyclic phenyl ethers, polyoxyethylene alkylamine, alkyl alkanol amide, polyalkylene glycol (meth)acrylate; and preferably include polyoxyethylene alkyl ethers, polyoxyethylene fatty acid esters, polyoxyethylene sorbitan fatty acid esters, and polyoxyethylene alkyl amines.

Examples of the anionic surfactant include alkylsulfuric acid ester salts, polyoxyethylene alkyl ether sulfuric acid salts, alkylbenzene sulfonic acid salts, alpha-olefine sulfonic acid salts, methyl taulyl acid salts, sulfosuccinic acid salts, ether sulfonic acid salts, ether carboxylic acid salts, fatty acid salts, naphthalene sulfonic acid formalin condensates, alkylamine salts, quaternary ammonium salts, alkyl betaines, and alkylamine oxides; and preferably include polyoxyethylene alkyl ether sulfuric acid salts, sulfosuccinic acid salts.

The adding amount of the surfactant is in the range of 0.1 to 30% by weight, preferably in the range of 5 to 20% by weight relative to the modified polyolefin resin composition. If it is larger than 30% by weight, an emulsifier exceeding the amount that is enough to form the water-based resin composition exists in the system, so that the adhesive strength is greatly reduced, and the plasticizing effect and bleed phenomenon occurs, and then blocking is more likely to occur when a dry coating was made with the composition.

The water-based resin composition of the present invention desirably has a pH of 5 or higher, and preferably pH of 6 to 10. When pH is less than 5, neutralization is insufficient, so that the modified polyolefin resin is not dispersed in water, or liable to cause precipitation and separation even if it is dispersed, to impair the storage stability. Therefore, such pH is not desired. When pH is not less than 10, problems concerning compatibility with other components and safety in working arise. A basic substance may be added in order to neutralize an acid component in the modified polyolefin resin composition to allow dispersion in water. Preferred examples of the basic substance include sodium hydroxide, potassium hydroxide, ammonia, methylamine, propylamine, hexylamine, octylamine, ethanolamine, propanolamine, diethanolamine, N-methyldiethanolamine, dimethylamine, diethylamine, triethylamine, N,N-dimethylethanol amine, 2-dimethylamino-2-methyl-1-propanol, 2-amino-2-methyl-1-propanol, and morpholine, with ammonia, triethylamine, 2-amino-2-methyl-1-propanol and morpholine being more preferred. The use amount thereof may be arbitrarily selected depending on the amount of acid component of the modified polyolefin resin composition, however, it should be added in such an amount that pH of the water-based resin composition is more than or equal to 5, preferably in the range of 6 to 10.

In the water-based resin composition of the present invention, the average particle diameter of the resin emulsified and dispersed in water is preferably not more than 300 nm, and more preferably not more than 200 nm. If it is 300 nm or more, storage stability and compatibility with other resins of the water-based resin composition deteriorates, and physical properties of coating such as adhesive strength to substrate, gasohol resistance, water resistance, and blocking resistance are also impaired. The average particle diameter is preferably more than or equal to 50 nm. The particle diameter can be made as small as possible, however, in such a case, the adding amount of emulsifying agent generally increases so that the tendency of deterioration in physical properties of coating such as adhesive strength to substrate, water resistance, and gasohol resistance is more likely to occur. Values of average particle diameter in the present description are determined by measurement of particle diameter distribution using a light scattering method. Particle diameters may be controlled by means of the adding amount and type of emulsifying agent, as well as by stirring power in emulsifying the resin in water.

The water-based resin composition may be emulsified in any known manners such as mechanically emulsifying method, phase conversion emulsifying method, D-phase emulsifying method, and gel emulsifying method. Single stirring using either one of a stirring blade, Disper and homogenizer equipment, composite stirring using more than one of the above, sand mill and multi-screw extruder may be used. However, in order to make the average particle diameter of the water-based resin composition not more than 300 nm, preferable methods include using phase-conversion emulsifying method, composite stirring having high shearing power, sand mill, and multi-screw extruder.

In the present invention, a cross-linking agent may be used in the water-based resin composition depending on the application or purpose. The term "cross-linking agent" refers to a compound that reacts with an active hydrogen in groups such as a hydroxyl group, carboxyl group, and amino group contained in the modified polyolefin resin, the surfactant and the basic substance to form a cross-linked structure. The cross-linking agent itself may be water soluble or may be dispersed in water in some way. Concrete examples include blocked isocyanate compounds, aliphatic or aromatic epoxy compounds, amine compounds, and amino resins.

The cross-linking agent may be added in any manner without restriction. For example, it may be blended in the course of aqueous conversion process or after aqueous conversion.

In addition to these, the water-based resin composition of the present invention may contain elements such as water-based acrylic resins, water-based polyurethane resins, lower alcohols, lower ketones, lower esters, antiseptic agents, leveling agents, antioxidants, photo stabilizing agents, UV absorbing agents, dyes, pigments, metal salts, and acids depending on the particular use application.

### 4. Formed article in which modified polyolefin resin is laminated

The modified polyolefin resin of the present invention having the properties as described above is very useful as a primer for a polyolefin substrate against which a paint is difficult to adhere. For example, on a surface of a polyolefin substrate, a modified polyolefin resin or a resin composition of the present invention is applied to form an undercoating layer, and then a paint is applied thereon. The obtained formed article is excellent in adhesion consistency of the paint.

As a formed article based on a substrate of a polyolefin resin, a bumper of automobile is exemplified. In a bumper of automobile, requirements concerning performances such as gasohol resistance, and gasoline resistance are particularly strict. As described above, since the modified polyolefin resin of the present invention is superior in performances such as gasohol resistance, and gasoline resistance as well as in adhesion strength, it is possible to produce an automobile's bumper which is excellent in these performances. In production of a bumper, there is a great demand for low temperature baking so as to reduce the cost. Since the above formed article of the present invention exerts an excellent performances such as adhesion strength under low temperature baking, it may be produced with low costs. Additionally, environmental consideration is especially required in recent years. Since the modified polyolefin resin of the present invention exerts excellent performances such as adhesion strength even in the form of water-based resin composition, environment-conscious production can be conducted.

### EXAMPLES

Next, the present invention will be explained in more detail based on Examples. It is to be noted however, the present invention is not limited to these examples. Weight average molecular weight and graft weight found in Prototype Examples were measured after washing a modified polyolefin resin composition with an excess amount of methanol.

Weight average molecular weight and number average molecular weight were measured according to a GPC method, and graft weight was measured according to alkaline titration method for unsaturated carboxylic acid derivatives having an acid group, according to FT-IR for those not having an acid group such as esters, and according to NMR for (meth) acrylic acid esters. Average particle diameter of a water-based resin composition was measured according to the light scattering method.

Measuring conditions will be shown below.

[GPC] Measurement was conducted using a High performance GPC apparatus (available from Tosoh Corporation under the trade name of HLC-8120GPC).

### Measurement conditions:

Column: TSKgel (G6000HXL, G5000HXL, G4000HXL, G3000HXL, G2000HXL)
Column temperature: 40°C
Detector: RI
Eluent: THF

[Alkaline titration method] Titration was effected using 1 mol/L KOH solution in methanol, and measurement was conducted.

[FT-IR] Measurement was conducted using an FT-IR measuring machine (available from JASCO Corporation, under the trade name of FT-IR-350).
Resolution: 4 cm⁻¹

[NMR] Measurement was conducted using a NMR measuring machine (available from Varian, type Mercury 400 nuclear magnetic resonance apparatus).

### Measuring condition:

Observed nucleus: 1H, 13C
Measurement solvent: mixture of o-dichlorobenzene and benzene-d6
Measuring temperature: 135°C

[Light scattering method] Using a particle diameter meter (available from MALVERN Instruments under the trade name of ZETASIZER 3000HAS), measurement was conducted according to the PCS (Photon Correlation Spectroscopy).

"MFR" used in the description of Examples is an abbreviation for Melt Flow Rate. The MFR is indicative of a fluidity of melting resin, and is a value measured in accordance with a Test method defined by JIS K7210.

### [Example 1 (not according to the invention)

A propylene-based random copolymer (propylene component 97 mol%, ethylene component 3 mol%, MFR = 2.0 g/10 min, Tm = 125°C) produced by using a metallocene catalyst as a polymerization catalyst was fed to a twin-screw extruder set at a barrel temperature of 350°C for heat degradation, to obtain a propylene-based random copolymer having a melt viscosity at 190°C of approximately 2000 mPa·s. After dissolving 100 g of this resin in 400 g of toluene under heating in a four-neck flask equipped with a stirrer, a condenser, and a dropping funnel, 1 g of dicumyl peroxide was added dropwise under stirring while keeping the temperature of the system at 110°C, and then allowed to degrade for one hour. Then 5 g of itaconic anhydride and 2.0 g of benzoyl peroxide were respectively added dropwise over 3 hours, and allowed to react for another one hour. After reaction, the reaction system was cooled to room temperature, and the reaction product was purified by putting it into an excess amount of acetone, to obtain a modified propylene resin having a weight average molecular weight of 75,000, and a graft weight of itaconic anhydride of 4.1% by weight.

### [Example 2]

100 parts by weight of propylene-based random copolymer (propylene component 97 mol%, ethylene component 3 mol%, MFR = 7.0 g/10 min, Tm = 125°C) produced by using a metallocene catalyst as a polymerization catalyst; 8 parts by weight of maleic anhydride; 10 parts by weight of methyl methacrylate; and 3 parts by weight of dicumyl peroxide were allowed to react by using a twin-screw extruder set at 180°C. Degassing was conducted in the extruder and the residual unreacted substance was removed. The resultant modified polypropylene resin had a weight average molecular weight of 95,000, a graft weight of maleic anhydride of 5.7% by weight, and a graft weight of methyl methacrylate of 6.4% by weight.

### [Example 3]

100 parts by weight of propylene-based random copolymer (propylene component 96 mol%, ethylene component 4 mol%, weight average molecular weight of 65,000, Tm = 80°C) produced by using a metallocene catalyst as a polymerization catalyst; 8 parts by weight of maleic anhydride; 4 parts by weight of lauryl methacrylate, 4 parts by weight of stearyl methacrylate, and 3 parts by weight of di-t-butyl peroxide were allowed to react by using a twin-screw extruder set at 180°C. Degassing was conducted in the extruder and the residual unreacted substance was removed. The resultant modified polypropylene resin had a weight average molecular weight of 66,000, a graft weight of maleic anhydride of 6.0% by weight, a graft weight of lauryl methacrylate of 3.2% by weight and a graft weight of stearyl methacrylate of 3.1% by weight.

### [Example 4]

100 parts by weight of propylene-based random copolymer (propylene component 96 mol%, ethylene component 4 mol%, weight average molecular weight of 55,000, Tm = 67°C) produced by using a metallocene catalyst as a polymerization catalyst; 8 parts by weight of maleic anhydride; 4 parts by weight of lauryl methacrylate, 4 parts by weight of stearyl methacrylate, and 3 parts by weight of di-t-butyl peroxide were allowed to react by using a twin-screw extruder set at 180°C. Degassing was conducted in the extruder and the residual unreacted substance was removed. The resultant modified polypropylene resin had a weight average molecular weight of 58,000, a graft weight of maleic anhydride of 6.1% by weight, a graft weight of lauryl methacrylate of 3.1% by weight and a graft weight of stearyl methacrylate of 3.1% by weight.

### [Example 5]

In a four-neck flask equipped with a stirrer, a condenser, and a dropping funnel, 100 g of propylene-based random copolymer (propylene component 96 mol%, ethylene component 4 mol%, weight average molecular weight of 55,000, Tm = 67°C) produced by using a metallocene catalyst as a polymerization catalyst and 400 g of toluene were introduced, and dissolved under heating by keeping the system temperature at 110°C. After then, 14 g of maleic anhydride, 8 g of acrylic acid, 8 g of cyclohexyl methacrylate, 9 g of tridecyl methacrylate, and 3.5 g of benzoyl peroxide were respectively added dropwise over 3 hours, and allowed to react for another one hour. After cooling to room temperature after reaction, the reaction product was purified by putting it into an excess amount of acetone, to obtain a modified polypropylene resin having a weight average molecular weight of 62,000, a graft weight of maleic anhydride of 7.2% by weight, a graft weight of acrylic acid of 4.9% by weight, a graft weight of cyclohexyl methacrylate of 4.6% by weight, and a graft weight of tridecyl methacrylate of 5.2% by weight.

### [Comparative Examples 1 and 2]

As comparative examples for Examples 1 and 2, respectively, using a propylene-based random copolymer produced by using a Ziegler-Natta catalyst as a polymerization catalyst (propylene component 72 mol%, ethylene component 7 mol%, butene component 21 mol%, weight average molecular weight of 120,000, Tm = 100°C) as an initial resin in place of the propylene-based random copolymer produced by using a metallocene catalyst as a polymerization catalyst, modification reaction was conducted in the similar manner, to obtain resins of Comparative examples 1 and 2.

### [Comparative Example 3]

In Example 3, using a propylene-based random copolymer produced by using a Ziegler-Natta catalyst as a polymerization catalyst (propylene component 68 mol%, ethylene component 8 mol%, butene component 24 mol%, weight average molecular weight of 50,000, Tm = 70°C) as an initial resin in place of the propylene-based random copolymer produced by using a metallocene catalyst as a polymerization catalyst, modification reaction was conducted in the similar manner.

### [Comparative Example 4]

In Example 5, using a propylene-based random copolymer produced by using a Ziegler-Natta catalyst as a polymerization catalyst (propylene component 68 mol%, ethylene component 8 mol%, butene component 24 mol%, weight average molecular weight of 50,000, Tm = 70°C) as an initial resin in place of the propylene-based random copolymer produced by using a metallocene catalyst as a polymerization catalyst, modification reaction was conducted in the similar manner.

### [Test procedures]

With respect to each of the modified polypropylene resins obtained in the above Examples 1 to 5 and Comparative examples 1 to 4, a 15% by weight solution in toluene was prepared and subjected to the following tests.

### Test 1: Solvent solubility test

Solution property after one week of the toluene solution was observed. The result is shown in Table 1.

### Evaluation criterion:

X: No precipitation and no graining were observed.
Y: Some precipitation and/or graining were observed.
Z: Significant precipitation and/or graining were observed, or insoluble, or two-phase separation.

### Test 2: Adhesive strength test

### Adhesion to polypropylene, PET:

A biaxially oriented polypropylene film or PET film not having been subjected to a surface treatment was coated with the above toluene solution using a #16 Meyre bar, and dried for 24 hours at room temperature. After drying, the resultant film was overlapped with a biaxially oriented polypropylene film or PET film that was not coated, and heat sealed using No.276 heat seal tester (Yasuda Seiki Seisakusyo Ltd.) under the condition of 1.5 kgf/cm², 110°C, and 3 seconds. The resultant test piece was cut into 15 mm width, and the sealed films were peeled from each other using a tension tester at 100 mm/min., and the peel strength was measured. The test was repeated three times, and an average value is shown as a result. The result is shown in Table 1.

### Adhesion to aluminum foil:

An aluminum foil not treated with a rolling oil was coated with the above toluene solution using a #16 Meyre bar, and dried for 24 hours at room temperature. After drying, the resultant foil was overlapped with a non-oriented polypropylene film and heat sealed using No.276 heat seal tester (Yasuda Seiki Seisakusyo Ltd.) under the condition of 1.5 kgf/cm², 200°C, and 1 second. The resultant test piece was cut into 15 mm width, and the sealed films were peeled from each other using a tension tester at 100 mm/min., and the peel strength was measured. The test was repeated three times, and an average value is shown as a result. The result is shown in Table 1.

### Test 3: tackiness test

### [Finger tacking test]

A biaxially oriented polypropylene film not having been subjected to a surface treatment was coated with the above toluene solution using a #16 Meyre bar, and dried for 24 hours at room temperature. After drying, the film was bent so that the coated surface overlapped with each other, pushed lightly with fingers, and then peeled off. Tack was evaluated from the peelability. The result is shown in Table 1.

### Evaluation criterion:

No: Film detached immediately after removal of fingers, and no tack observed.
Weak: Film detached after a pause from removal of fingers.
Moderate: Film detached after several seconds from removal of fingers.
Strong: Film not detached even after 10 seconds from removal of fingers.

### [Tacking test under warming]

A biaxially oriented polypropylene film not having been subjected to a surface treatment was coated with the above toluene solution using a #16 Meyre bar, and dried for 24 hours at room temperature. After drying, the resultant film was overlapped with a biaxially oriented polypropylene film not having been coated, applied with a load of 30 gf/cm², and reserved under an atmosphere of 10% RH or less and 50°C. After 24 hours, the overlapped films were peeled from each other and tack was evaluated from the peelability.

### Evaluation criterion:

No: No catching occurred at the time of peeling.
Weak: Slight catching occurred at the time of peeling.
Moderate: Catching occurred at the time of peeling, and when the specimen was cut in the same manner as the heat seal strength test and drawn by a tension tester, it showed a peel strength of more than or equal to 100 gf.
Strong: Strong catching occurred at the time of peeling, and when the specimen was cut in the same manner as the heat seal strength test and drawn by a tension tester, it showed a peel strength of more than or equal to 200 gf.

### Test 4: Primer test

The above toluene solution was sprayed on an ultrahigh-rigid polypropylene plate so that the dry thickness of the coating was in the range of 10 to 15 µm, and dried at 80°C for 30 minutes. Then a two-liquid type top coating white paint was sprayed thereon so that the dry thickness of the coating was in the range of 45 to 50 µm, kept for 15 minutes at room temperature, and then baking was conducted at 90°C for 30 minutes. The specimen was kept for 3 days at room temperature, and then a test similar to that for the paint as described below was conducted. The result is shown in Table 2.

### [Adhesive strength]

A 2-mm-spacing grid of 100 cells that reached to a substrate was created on the coating surface, and a cellophane adhesive tape was adhered thereon and peeled in the direction of 180 degrees. The adhesive strength was evaluated from the remaining degree of the coating film.

### [Water resistance]

After immersing the coated plate in warm water at 40°C for 240 hours, a 2-mm-spacing grid of 100 cells that reached to a substrate was created on the coating surface, and a cellophane adhesive tape was adhered thereon and peeled in the direction of 180 degrees. The adhesive strength was evaluated from the remaining degree of the coating film.

### [Peel strength]

Each coating surface was lined by pasting bleached cloth with a water-based adhesive. From on the cloth, a 1-mm width cut was created with a cutter knife, and the cloth was carefully removed from an end to a midpoint thereof so that the peeling was conducted between the substrate and the coating layer of the present invention. The specimen thus obtained was peeled by a tension tester at 100 mm/min and the peel strength was measured.

### [Gasoline resistance]

A scratch (x mark) reaching to the substrate was created on each coating surface with a cutter knife and the appearance of the coating film immersed in gasoline was visually checked.

### Evaluation criterion:

A: No change observed after 12 hours.
B: Coating film peeled after 2 to 12 hours.
C: Coating film peeled after 30 minutes to 2 hours.
D: Coating film peeled within 30 minutes.

### [Gasohol resistance]

A scratch (x mark) reaching to the substrate was created on each coating surface with a cutter knife and the appearance of the coating film immersed in 9/1 (vol/vol) mixture of gasoline and ethanol was visually checked.

### Evaluation criterion:

A: No change observed after 12 hours.
B: Coating film peeled after 2 to 12 hours.
C: Coating film peeled after 30 minutes to 2 hours.
D: Coating film peeled within 30 minutes.

### Test 5: Ink test

130 g of the above toluene solution and 20 g of titanium dioxide were kneaded by a sand mill for three hours, and then diluted in toluene so that the viscosity was 25 to 30 sec./20°C by #3 Zahn Cup, to prepare an ink. The resultant ink was subjected to the adhesive tape peeling test and heat seal test in the manner as described below. The results are shown in Table 2.

### [Adhesive tape peeling test]

The prepared ink was applied to a surface untreated polypropylene film (hereinafter, surface untreated PP) using a #14 Meyre bar, and dried for 24 hours at room temperature. Then a cellophane adhesive tape was pasted on the ink applied surface, and the surface appearance of the coating surface was examined when the tape was peeled off either slowly or quickly.

### Evaluation criterion:

Good: No peeling observed
Bad: Peeling observed.

### [Heat seal test]

An ink was applied to a surface untreated PP in the same manner as the adhesive tape peeling test, and dried for 24 hours at room temperature. After drying, the resultant coating surfaces were overlapped with each other, and heat sealed using No.276 heat seal tester (Yasuda Seiki Seisakusyo Ltd.) under the condition of 1.5 kgf/cm², 110°C, and 3 seconds. The resultant test piece was cut into 15 mm width, and the sealed films were peeled from each other using a tension tester at 100 mm/min., and the peel strength was measured. The test was repeated three times, and an average value is shown as a result.

**Table 1 Test result**

| | Solvent solubility test | | Adhesive strength test (gf/15mm) | | | Tackiness test | |
|---|---|---|---|---|---|---|---|
| | 20°C | 5°C | PP | PET | Aluminum | Finger tacking | warming |
| Ex. 1 | X | Z | 840 | 700 | 1250 | No | Weak |
| Ex. 2 | X | Y | 850 | 700 | 1320 | No | No |
| Ex. 3 | X | Y | 920 | 750 | 1280 | No | No |
| Ex. 4 | X | X | 950 | 800 | 1400 | No | No |
| Ex. 5 | X | X | 880 | 720 | 1050 | No | No |
| Comp. Ex. 1 | X | Z | 370 | 320 | 560 | Moderate | Strong |
| Comp. Ex. 2 | Y | Z | 520 | 500 | 670 | Weak | Strong |
| Comp. Ex. 3 | X | Y | 600 | 420 | 800 | No | Strong |
| Comp. Ex. 4 | X | Y | 400 | 400 | 720 | No | Moderate |

**Table 2 Test result**

| | Primer test | | | | | Ink test | | |
|---|---|---|---|---|---|---|---|---|
| | Adhesive strength | Water resistance | Peel strength (gf/15mm) | Gasoline resistance | Gaso-hole resistance | Tape peeling | | Heat seal (gf/15mm) |
| | | | | | | Slowly | Quickly | |
| Ex. 1 | 100/100 | 100/100 | 550 | A | B | Good | Good | 590 |
| Ex. 2 | 100/100 | 100/100 | 800 | A | B | Good | Good | 650 |
| Ex. 3 | 100/100 | 100/100 | 650 | A | A | Good | Good | 730 |
| Ex. 4 | 100/100 | 100/100 | 1100 | A | B | Good | Good | 780 |
| Ex. 5 | 100/100 | 100/100 | 520 | A | B | Good | Good | 700 |
| Comp. Ex. 1 | 90/100 | 80/100 | 430 | C | D | Bad | Bad | 360 |
| Comp. Ex. 2 | 100/100 | 100/100 | 650 | C | D | Good | Good | 410 |
| Comp. Ex. 3 | 100/100 | 100/100 | 800 | B | C | Good | Good | 550 |
| Comp. Ex. 4 | 95/100 | 95/100 | 480 | C | D | Good | Bad | 550 |

### [Example 6] (Prototype Example 1)

100 parts by weight of propylene-based random copolymer (propylene component 97 mol%, ethylene component 3 mol%, MFR = 7.0 g/10 min, Tm = 125°C) produced by using a metallocene catalyst as a polymerization catalyst; 8 parts by weight of itaconic anhydride; 3 parts by weight of di-t-butylperoxide were allowed to react by using a twin-screw extruder set at 160°C. Degassing was conducted in the extruder and the residual unreacted substance was removed. The resultant modified polypropylene resin had a weight average molecular weight of 98,000, a molecular weight distribution (Mw/Mn) of 2.7, and a graft weight of itaconic anhydride of 5.8% by weight.

### [Example 7] (Prototype Example 2)

100 parts by weight of propylene-based random copolymer (propylene component 96 mol%, ethylene component 4 mol%, weight average molecular weight of 55,000, Tm = 67°C) produced by using a metallocene catalyst as a polymerization catalyst; 8 parts by weight of maleic anhydride; 8 parts by weight of methyl methacrylate; and 3 parts by weight of dicumyl peroxide were allowed to react by using a twin-screw extruder set at 180°C. Degassing was conducted in the extruder and the residual unreacted substance was removed. The resultant modified polypropylene resin had a weight average molecular weight of 58,000, a molecular weight distribution (Mw/Mn) of 2.6, a graft weight of maleic anhydride of 5.7% by weight, and a graft weight of methyl methacrylate of 6.4% by weight.

### [Example 8] (Prototype Example 3)

100 parts by weight of propylene-based random copolymer (propylene component 97 mol%, ethylene component 3 mol%, MFR = 7.0 g/10 min, Tm = 125°C) produced by using a metallocene catalyst as a polymerization catalyst; 8 parts by weight of itaconic anhydride; 8 parts by weight of stearyl methacrylate; and 3 parts by weight of di-t-butylperoxide were allowed to react by using a twin-screw extruder set at 180°C. Degassing was conducted in the extruder and the residual unreacted substance was removed. The resultant modified polypropylene resin had a weight average molecular weight of 75,000, a molecular weight distribution (Mw/Mn) of 3.0, a graft weight of itaconic anhydride of 6.1 % by weight and a graft weight of stearyl methacrylate of 6.2% by weight.

### [Example 9] (Prototype Example 4)

100 parts by weight of propylene-based random copolymer (propylene component 97 mol%, ethylene component 3 mol%, MFR = 7.0 g/10 min, Tm = 125°C) produced by using a metallocene catalyst as a polymerization catalyst; 8 parts by weight of maleic anhydride, 2 parts by weight of acrylic acid, 2 parts by weight of cyclohexyl methacrylate, 2 parts by weight of tridecyl methacrylate, and 3 parts by weight of di-t-butyl peroxide were allowed to react by using a twin-screw extruder set at 160°C. Degassing was conducted in the extruder and the residual unreacted substance was removed. The resultant modified polypropylene resin had a weight average molecular weight of 133,000, a molecular weight distribution (Mw/Mn) of 3.2, a graft weight of maleic anhydride of 5.8% by weight, a graft weight of acrylic acid of 1.2% by weight, a graft weight of cyclohexyl methacrylate of 1.3% by weight, a graft weight of tridecyl methacrylate of 1.0% by weight.

### [Example 10] (Prototype Example 10)

100 parts by weight of propylene-based random copolymer (propylene component 96 mol%, ethylene component 4 mol%, weight average molecular weight of 65,000, Tm = 80°C) produced by using a metallocene catalyst as a polymerization catalyst; 8 parts by weight of maleic anhydride; 8 parts by weight of methyl methacrylate; and 3 parts by weight of dicumyl peroxide were allowed to react by using a twin-screw extruder set at 180°C. Degassing was conducted in the extruder and the residual unreacted substance was removed. The resultant modified polypropylene resin had a weight average molecular weight of 66,000, a molecular weight distribution (Mw/Mn) of 2.5, a graft weight of maleic anhydride of 5.6% by weight, and a graft weight of methyl methacrylate of 6.5% by weight.

### [Comparative Example 5] (Prototype Example 5)

Modification reaction was conducted in the same manner as Example 6 (Prototype Example 1) except that as a raw material resin, a propylene-based random copolymer (propylene component 72 mol%, ethylene component 7 mol%, butene component 21 mol%, weight average molecular weight 120,000, Tm = 100°C) produced by using a Ziegler-Natta catalyst was used in place of a propylene-based random copolymer produced by using a metallocene catalyst as a polymerization catalyst. The obtained modified propylene resin had a weight average molecular weight of 82,000, a molecular weight distribution (Mw/Mn) of 5.5, and a graft weight of maleic anhydride of 5.2% by weight.

### [Comparative Example 6] (Prototype Example 6)

Modification reaction was conducted in the same manner as Example 7 (Prototype Example 2) except that as a raw material resin, a propylene-based random copolymer (propylene component 68 mol%, ethylene component 8 mol%, butene component 24 mol%, weight average molecular weight 50,000, Tm = 70°C) produced by using a Ziegler-Natta catalyst was used in place of a propylene-based random copolymer produced by using a metallocene catalyst as a polymerization catalyst. The obtained modified propylene resin had a weight average molecular weight of 55,000, a molecular weight distribution (Mw/Mn) of 6.4, a graft weight of maleic anhydride of 5.9% by weight, and graft weight of methyl methacrylate of 6.3% by weight.

### [Comparative Example 7] (Prototype Example 7)

Modification reaction was conducted in the same manner as Example 8(Prototype Example 3) using as a raw material resin, a propylene-based random copolymer (propylene component 68 mol%, ethylene component 8 mol%, butene component 24 mol%, weight average molecular weight 50,000, Tm = 70°C) produced by using a Ziegler-Natta catalyst was used in place of a propylene-based random copolymer produced by using a metallocene catalyst as a polymerization catalyst. The obtained modified propylene resin had a weight average molecular weight of 57,000, a molecular weight distribution (Mw/Mn) of 7.2, a graft weight of itaconic anhydride of 6.0% by weight, and graft weight of stearyl methacrylate of 5.9% by weight.

### [Comparative Example 8] (Prototype Example 8)

Modification reaction was conducted in the similar manner as Example 9 (Prototype example 4) except that a twin-screw extruder at 190°C was used, and as a raw resin, a propylene-based random copolymer (propylene component 72 mol%, ethylene component 7 mol%, butene component 21 mol%, weight average molecular weight 120,000, Tm = 100°C) produced by using a Ziegler-Natta catalyst was used in place of a propylene-based random copolymer produced by using a metallocene catalyst as a polymerization catalyst. The obtained modified propylene resin had a weight average molecular weight of 140,000, a molecular weight distribution (Mw/Mn) of 6.2, a graft weight of maleic anhydride of 6.6% by weight, a graft weight of acrylic acid of 1.4% by weight, a graft weight of cyclohexyl methacrylate of 1.6% by weight, and a graft weight of tridecyl methacrylate of 1.2% by weight.

### [Comparative Example 9] (Prototype Example 9)

Modification reaction was conducted in the same manner as Example 8 (Prototype Example 3) except that the kind of the propylene-based random copolymer produced by using a metallocene catalyst as a polymerization catalyst was changed to a propylene-based random copolymer of different specification (SunAllomer Ltd., MFR = 45.0 g/10 min, Tm = 148°C). The obtained modified propylene resin had a weight average molecular weight of 220,000, a molecular weight distribution (Mw/Mn) of 2.8, a graft weight of itaconic anhydride of 5.8% by weight, and a graft weight of stearyl methacrylate of 6.2% by weight.

### [Example 11] (not according to the invention)

To a four-neck flask equipped with a stirrer, a condenser, a thermometer, and a dropping funnel, 100 parts by weight of modified polyolefin resin obtained in Example 6 (Prototype Example 1) and 10 parts by weight of polyoxyethylene alkyl ether sulfate which is a surfactant were added, and kneaded at 120°C for 30 minutes. Then 10 parts by weight of dimethylethanolamine was added over 5 minutes, retained for 5 minutes, and then added with 300 parts by weight of deionized water at 90°C over 40 minutes. Subsequently, the reaction was cooled to room temperature under stirring, to obtain a water-based resin composition. The water-based resin composition contained solid part of 30% by weight, and had pH=7.5, a viscosity of 47 mPa·s/25°C, and an average particle diameter of 122 nm.

### [Example 12]

A water-based resin composition was obtained in the same manner as Example 11 except that 100 parts by weight of the modified polyolefin resin obtained in Example 7 (Prototype Example 2) was used and the surfactant was changed to 10 parts of polyoxyethylene alkylamine. The water-based resin composition contained solid part of 30% by weight, and had pH = 7.9, a viscosity of 76 mPa·s/25°C, and an average particle diameter of 86 nm.

### [Example 13]

A water-based resin composition was obtained in the same manner as Example 11 except that 100 parts by weight of the modified polyolefin resin obtained in Example 8 (Prototype Example 3) was used and the surfactant was changed to 10 parts of polyoxyethylene alkylether sulfate. The water-based resin composition contained solid part of 50% by weight, and had pH=6.8, a viscosity of 136 mPa·s/25°C, and an average particle diameter of 75 nm.

### [Example 14]

To a four-neck flask equipped with a stirrer, a condenser, a thermometer, and a dropping funnel, 100 parts by weight of modified polyolefin resin obtained in Prototype Example 4, 10 parts by weight of polyoxyethylene alkylamine as a surfactant and 18 parts by weight of methylcyclohexane were added, and kneaded at 120°C for 30 minutes. Then 10 parts by weight of morpholine was added over 5 minutes, retained for 5 minutes, and then added with 300 parts by weight of deionized water at 90°C over 40 minutes. After removing methylcyclohexane under reduced pressures, the reaction was cooled to room temperature under stirring, to obtain a water-based resin composition. The water-based resin composition contained solid part of 30% by weight, and had pH = 7.9, a viscosity of 70 mPa·s/25°C, and an average particle diameter of 110 nm.

### [Example 15]

A water-based resin composition was obtained in the same manner as Example 11 except that 100 parts by weight of the modified polyolefin resin obtained in Example 10 (Prototype Example 10) was used and the surfactant was changed to 10 parts of polyoxyethylene alkylamine. The water-based resin composition contained solid part of 30% by weight, and had pH = 7.9, a viscosity of 68 mPa·s/25°C, and an average particle diameter of 76 nm.

### [Comparative Example 10]

A water-based resin composition was obtained in the same manner as Example 11 except that 100 parts by weight of the modified polyolefin resin obtained in Comparative Example 5 (Prototype Example 5) was used. The water-based resin composition contained solid part of 30% by weight, and had pH = 7.3, a viscosity of 75 mPa·s/25°C, and an average particle diameter of 108 nm.

### [comparative Example 11]

A water-based resin composition was obtained in the same manner as Example 12 except that 100 parts by weight of the modified polyolefin resin obtained in Comparative Example 6 (Prototype Example 6) was used. The water-based resin composition contained solid part of 30% by weight, and had pH = 7.9, a viscosity of 108 mPa·s/25°C, and an average particle diameter of 92 nm.

### [Comparative Example 12]

A water-based resin composition was obtained in the same manner as Example 12 except that 300 parts by weight of the modified polyolefin resin obtained in Comparative Example 7 (Prototype Example 7) and the surfactant was changed to 10 parts by weight of polyoxyethylene alkylether sulfate. The water-based resin composition contained solid part of 50% by weight, and had pH = 6.8, a viscosity of 279 mPa·s/25°C, and an average particle diameter of 86 nm.

### [Comparative Example 13]

A water-based resin composition was obtained in the same manner as Example 14 using 100 parts by weight of the modified polyolefin resin obtained in Comparative Example 8 (Prototype Example 8). The water-based resin composition contained solid part of 30% by weight, and had pH = 7.9, a viscosity of 132 mPa·s/25°C, and an average particle diameter of 191 nm.

### [Comparative Example 14]

To a four-neck flask equipped with a stirrer, a condenser, a thermometer, and a dropping funnel, 100 parts by weight of modified polyolefin resin obtained in Comparative Example 8 (Prototype Example 9), 10 parts by weight of polyoxyethylene alkyl ether sulfate which is a surfactant, and 25 parts by weight of toluene were added, and kneaded at 155°C for 30 minutes. Then 10 parts by weight of morpholine was added over 5 minutes, retained for 5 minutes, and then added with 300 parts by weight of deionized water at 90°C over 40 minutes so as to cause aqueous conversion. However, the melt viscosity was very high, and hence a water-based resin composition could not be obtained.

### [Comparative Example 15]

A water-based resin composition was obtained in the same manner as Example 13 except that 100 parts by weight of the modified polyolefin resin obtained in Example 8 (Prototype Example 3) was used and the adding amount of the surfactant was changed to 2 parts by weight. The water-based resin composition contained solid part of 30% by weight, and had pH = 6.7, a viscosity of 237 mPa·s/25°C, and an average particle diameter of 342 nm. Physical properties and the like of the above Examples 11 to 15 and Comparative Examples 10 to 15 are collectively shown in Table 3.

**Table 3**

| Sample | Catalyst | Melting point (°C) | Weight average molecular weight | Average particle diameter of water dispersed composition (nm) |
|---|---|---|---|---|
| Ex. 11 | Metallocene | 125 | 98,000 | 122 |
| Ex. 12 | Metallocene | 70 | 58,000 | 86 |
| Ex. 13 | Metallocene | 125 | 75,000 | 75 |
| Ex. 14 | Metallocene | 125 | 133,000 | 110 |
| Ex. 15 | Metallocene | 80 | 66,000 | 76 |
| Comp. Ex. 10 | Ziegler-Natta | 100 | 82,000 | 108 |
| Comp. Ex. 11 | Ziegler-Natta | 70 | 55,000 | 92 |
| Comp. Ex. 12 | Ziegler-Natta | 70 | 57,000 | 86 |
| Comp. Ex. 13 | Ziegler-Natta | 100 | 140,000 | 191 |
| Comp. Ex. 14 | Metallocene | 148 | 220,000 | Not obtained |
| Comp. Ex. 15 | Metallocene | 125 | 75,000 | 342 |

The water-based resin compositions obtained in the above Examples 11 to 15 and Comparative Examples 10 to 15 were subjected to the following tests. The results are shown in Table 4.

### [Tacking test]

A polypropylene film not having subjected to a surface treatment was coated with a water-based resin composition using a #7 Meyre bar, and dried for 15 hours at room temperature. After drying, the test piece was bent so that the coated surfaces were overlapped with each other, pushed lightly with fingers, and then peeled off. Tack was evaluated from the peelability.

### [Adhesive strength test]

A water-based resin composition was sprayed on an ultrahigh-rigid polypropylene plate so that the film thickness was in the range of 10 µm to 15 µm, and dried for 30 minutes at 70°C. After keeping the test piece at room temperature for 3 days, a 1-mm-spacing grid of 100 cells was created by cutting the coating surface with a cutter knife such that the substrate was reached to. Then a cellophane adhesive tape was adhered thereon and peeled in the direction of 180 degrees five times, and the number of remaining cells was counted.

### [Heat seal strength test]

On a polypropylene film or PET film not having been subjected to a surface treatment, a water-based resin composition was applied using a #7 Meyre bar, and dried at room temperature for 15 hours. After drying, coated surfaces were overlapped with each other and heat sealed using No.296 heat seal tester (Yasuda Seiki Seisakusyo Ltd.) under the condition of 1.5 kgf/cm², 90°C, and 10 second. The resultant test piece was cut into 1.5 cm width, and peeled using a tension tester with a 5 kilogram weight at 100 mm/min., and the peel strength was measured. The test was repeated three times, and an average value was taken as a result.

### [Storage stability test]

A water-based resin compositions was stored at room temperature, and the appearance after 3 months was checked.

### [Compatibility test]

Aqueous-converted polyurethane was blended so that the solid ratio was 1:1, thoroughly stirred, and the solution condition was checked after 30-days storage at room temperature.

**Table 4 Test result**

| Sample | Tacking | Adhesive strength X/100 | Heat seal strength (gf/15mm) | | Storage stability | Compatibility |
|---|---|---|---|---|---|---|
| | | | PP | PET | | |
| Ex. 11 | G | 100 | 720 | 580 | G | NG |
| Ex. 12 | G | 100 | 820 | 690 | G | G |
| Ex. 13 | G | 100 | 940 | 760 | G | G |
| Ex. 14 | G | 100 | 970 | 750 | G | G |
| Ex. 15 | G | 100 | 790 | 650 | G | G |
| Comp. Ex. 10 | NG | 80 | 690 | 510 | G | NG |
| Comp. Ex. 11 | NG | 40 | 680 | 450 | G | G |
| Comp. Ex. 12 | NG | 60 | 710 | 530 | NG | G |
| Comp. Ex. 13 | NG | 70 | 780 | 500 | G | G |
| Comp. Ex. 14 | Water-based resin composition was not obtained | | | | | |
| Comp. Ex. 15 | G | 85 | 750 | 590 | NG | NG |

| | | | | | | |
|---|---|---|---|---|---|---|
| Note: Tack G: No tack observed NG: tack observed Storage stability G: Good, NG: precipitation and separation Compatibility G: Good, NG: Separation into two phases | | | | | | |

As shown in Table 4, among copolymers produced using a metallocene catalyst, those added with acrylic acid in graft modification showed good results in all evaluations. As to those not added with acrylic acid, good evaluation results other than compatibility were observed. When a Ziegler-Natta catalyst was used in place of the metallocene catalyst, the blocking resistance, adhesive strength, and heat seal strength were significantly impaired. Even when the metallocene catalyst was used, if the copolymer had a weight average molecular weight equal to or more than 200,000 and a melting point of 130°C or higher, high melt viscosity resulted and a water-based resin composition could not be obtained upon aqueous conversion. As is evident from Example 13, even when the solid concentration of the water-based resin composition was increased, the level of physical property was kept good, revealing suitability for high solidification.

As shown in Comparative Example 15, when the average particle diameter exceeds 300 nm, the results of blocking resistance, adhesive strength, and heat seal strength were good, but storage stability and compatibility were impaired.

### Test 6: Primer test

Each of the water-based resin compositions obtained in Examples 11 to 15 and Comparative Examples 10 to 15 was adjusted so that the solid content was 10% by weight, and sprayed on an ultrahigh-rigid polypropylene plate so that the dry thickness of the coating was in the range of 10 to 15 µm, and dried at 60°C for 30 minutes. Then a two-liquid type top coating white paint was sprayed thereon so that the dry thickness of the coating was in the range of 45 to 50 µm, kept for 15 minutes at room temperature, and sufficiently dried at 70°C for 30 minutes. The specimen was kept for 3 days at room temperature, and then the following tests were conducted. The result is shown in Table 5.

### [Adhesive strength test]

A similar grid test as described above was conducted.

### [Water resistance test]

After immersing the test piece in warm water at 40°C for 240 hours, the appearance of the coating was visually checked. Also an adhesive strength test based on the grid test was conducted.

### [Peel strength]

Each coating surface was lined by pasting bleached cloth with a water-based adhesive. From on the cloth, a 1-mm width cut was created with a cutter knife, and the cloth was carefully removed from an end to a midpoint thereof so that the peeling was conducted between the substrate and the coating layer of the present invention. The specimen thus obtained was peeled by a tension tester at 100 mm/min and the peel strength was measured.

### [Gasoline resistance]

A scratch (x mark) reaching to the substrate of each coating surface was created with a cutter knife and the appearance of the coating film immersed in gasoline was visually checked.

### Evaluation criterion:

A: No change observed after 12 hours.
B: Coating film peeled after 2 to 12 hours.
C: Coating film peeled after 30 minutes to 2 hours.
D: Coating film peeled within 30 minutes.

### [Gasohol resistance]

A scratch (x mark) reaching to the substrate of each coating surface was created with a cutter knife and a appearance of the coating film immersed in 9/1 (vol/vol) mixture of gasoline and ethanol was visually checked.

### Evaluation criterion:

A: No change observed after 12 hours.
B: Coating film peeled after 2 to 12 hours.
C: Coating film peeled after 30 minutes to 2 hours.
D: Coating film peeled in 30 minutes.

**Table 5 Test result**

| Sample | Adhesive strength test | Water resistance | Peel strength (gf/15mm ) | Gasoline resistance | Gasohol resistance |
|---|---|---|---|---|---|
| Ex. 11 | 100/100 | No abnormality | 650 | B | B |
| Ex. 12 | 100/100 | No abnormality | 950 | A | B |
| Ex. 13 | 100/100 | No abnormality | 750 | A | B |
| Ex. 14 | 100/100 | No abnormality | 600 | A | B |
| Ex. 15 | 100/100 | No abnormality | 650 | A | A |
| Comp. Ex. 10 | 80/100 | Blister occurred | 550 | C | D |
| Comp. Ex. 11 | 45/100 | Blister occurred | 700 | C | D |
| Comp. Ex. 12 | 60/100 | Blister occurred | 650 | C | C |
| Comp. Ex. 13 | 70/100 | Blister occurred | 450 | C | C |
| Comp. Ex. 14 | Water-based resin composition was not obtained | | | | |
| Comp. Ex. 15 | 40/100 | Blister occurred | 600 | C | C |

As shown in Table 5, copolymers produced by using metallocene catalyst showed good results in all evaluations. When a Ziegler-Natta catalyst was used in place of a metallocene catalyst, the results were bad in all evaluations.

## Claims

1. A modified polyolefin resin,
which is obtainable by graft modifying a propylene-based random copolymer having a melting point of 50 to 130°C as determined by differential scanning calorimetry (DSC), the copolymer being obtainable by polymerization in the presence of a metallocene catalyst, with an unsaturated carboxylic acid and/or its derivative and with a (meth)acrylic acid ester, and
which has a weight average molecular weight of 15,000 to 200,000 as determined by gel permeation chromatography (GPC), a graft weight of the unsaturated carboxylic acid and/or its derivative being in the range of 0.1 to 20% by weight, a graft weight of the (meth)acrylic acid ester being in the range of 0.1 to 30% by weight.

2. An adhesive, comprising the modified polyolefin resin according to claim 1.

3. A primer, comprising the modified polyolefin resin according to claim 1.

4. A binder for paint, comprising the modified polyolefin resin according to claim 1.

5. A binder for ink, comprising the modified polyolefin resin according to claim 1.

6. A polyolefin formed article, comprising:
a polyolefin substrate, an undercoat layer formed of the modified polyolefin resin according to claim 1, and a paint layer;
wherein the undercoat layer is overlaid on the polyolefin substrate; and
wherein the paint layer is overlaid on the undercoat layer.

7. A modified polyolefin resin composition, comprising:
the modified polyolefin resin according to claim 1; and an organic solvent.

8. A modified polyolefin resin composition, comprising:
the modified polyolefin resin according to claim 1; water; and a surfactant,
the modified polyolefin resin being dispersed in water to have an average particle diameter of not more than 300 nm obtained from the particle size distribution as determined by light scattering.

## Patentansprüche

1. Modifiziertes Polyolefinharz,
das durch Pfropfmodifizieren eines auf Propylen basierenden statistischen Copolymers erhalten werden kann, das einen mit Hilfe der Differentialscanningkalorimetrie (DSC) bestimmten Schmelzpunkt von 50° bis 130 °C aufweist, wobei das Copolymer durch Polymerisation in Gegenwart eines Metallocen-Katalysators mit einer ungesättigten Carbonsäure und / oder einem Derivat davon und mit einem (Meth)acrylsäureester erhalten werden kann,
das ein mit Hilfe der Gelpermeationschromatographie (GPC) bestimmtes Gewichtsmittel des Molekulargewichts von 15.000 bis 200.000 aufweist, wobei ein Pfropfgewicht des (Meth)acrylsäureesters und / oder eines Derivats davon im Bereich von 0,1% bis 30 Gew.-% liegt.

2. Klebmittel, umfassend das modifizierte Polyolefinharz nach Anspruch 1.

3. Haftvermittler, umfassend das modifizierte Polyolefinharz nach Anspruch 1.

4. Bindemittel für Anstrichstoff, umfassend das modifizierte Polyolefinharz nach Anspruch 1.

5. Bindemittel für Tinte, umfassend das modifizierte Polyolefinharz nach Anspruch 1.

6. Polyolefin-Formgegenstand, umfassend:
ein Polyolefin-Substrat, eine Grundbeschichtung, die aus dem modifizierten Polyolefinharz nach Anspruch 1 gebildet ist, und eine Lackschicht;
wobei sich die Grundbeschichtung auf dem Polyolefin-Substrat befindet; und
wobei sich die Lackschicht auf der Grundbeschichtung befindet.

7. Modifizierte Polyolefinharz-Zusammensetzung, umfassend:
das modifizierte Polyolefinharz nach Anspruch 1; und
ein organisches Lösemittel.

8. Modifizierte Polyolefinharz-Zusammensetzung, umfassend:
das modifizierte Polyolefinharz nach Anspruch 1; Wasser; und ein Tensid,
wobei das modifizierte Polyolefinharz in Wasser dispergiert ist, so dass es einen mittleren Partikeldurchmesser von nicht mehr als 300 nm aufweist, erhalten aus der Partikelgrößenverteilung, die mit Hilfe der Lichtstreuung bestimmt wird.

## Revendications

1. Résine de polyoléfine modifiée,
qui peut être obtenue par modification par greffage d'un copolymère aléatoire à base de propylène ayant un point de fusion de 50 à 130°C tel que déterminé par calorimétrie différentielle à compensation de puissance (ACD), le copolymère pouvant être obtenu par polymérisation en la présence d'un catalyseur métallocène, avec un acide carboxylique insaturé et/ou son dérivé et avec un ester d'acide (méth)acrylique, et
qui possède un poids moléculaire moyen en poids de 15 000 à 200 000 tel que déterminé par chromatographie de perméation sur gel (CPG), un poids de greffe de l'acide carboxylique insaturé et/ou son dérivé se situant dans la plage de 0,1 à 20 % en poids, un poids de greffe de l'ester d'acide (méth)acrylique se situant dans la plage de 0,1 à 30 % en poids.

2. Adhésif, comprenant la résine de polyoléfine modifiée selon la revendication 1.

3. Amorce, comprenant la résine de polyoléfine modifiée selon la revendication 1.

4. Liant pour peinture, comprenant la résine de polyoléfine modifiée selon la revendication 1.

5. Liant pour encre, comprenant la résine de polyoléfine modifiée selon la revendication 1.

6. Article formé de polyoléfine, comprenant:
un substrat de polyoléfine, une couche de sous-couche constituée de la résine de polyoléfine modifiée selon la revendication 1, et une couche de peinture;
la couche de sous-couche étant superposée sur le substrat de polyoléfine; et
la couche de peinture étant superposée sur la couche de sous-couche.

7. Composition de résine de polyoléfine modifiée, comprenant:
la résine de polyoléfine modifiée selon la revendication 1; et
un solvant organique.

8. Composition de résine de polyoléfine modifiée, comprenant:
la résine de polyoléfine modifiée selon la revendication 1; de l'eau; et un tensioactif,
la résine de polyoléfine modifiée étant dispersée dans l'eau pour présenter un diamètre moyen de particule non supérieur à 300 nm obtenu à partir de la distribution de tailles de particules telle que déterminée par diffusion de lumière.
